# EUROPEAN PATENT SPECIFICATION

(11) **EP 0 750 173 B1**
(45) Date of publication and mention of the grant of the patent: **18.11.1998**
(21) Application number: 95830261.4
(22) Date of filing: 21.06.1995
(51) Int. Cl.: G01B 5/30, G01B 7/16, G01B 7/30

(54) **Double pendulum device for measuring angular microvariations**
Doppelpendel-Vorrichtung zur Messung der Winkelmikrovariationen
Dispositif de double pendules pour mesurer des micro-variations angulaires

(43) Date of publication of application: 27.12.1996
(73) Proprietor: ENEA - Ente Nazionale per le Nuove Tecnologie, l'Energia e l'Ambiente, 00198 Roma (IT)
(72) Inventor: Carbonaro, Vincenzo, I-00198 Roma (IT); Villa, Giordano, I-00198 Roma (IT)
(74) Representative: Taliercio, Antonio

(56) References cited:
- DE-A- 1 473 646
- DE-B- 1 798 384
- FR-A- 2 064 761
- US-A- 3 983 636

## Description

This invention broadly relates to a device for measuring angular microvariations and more particularly it concerns a goniometer device for measuring angular microvariations in structures of any kind, such as microvariations due to soil movements, construction overloads, atmospheric agents, hygrometric and thermal stresses, and like, which introduce undesired changes into the equilibrium regimen of the concerned structure.

The measurement instrument according to this invention can be essentially utilized for:
- continuously monitoring bridges, tunnels, buildings, landslips or big machines, in order to evaluate their medium and long term behaviors, the tendencies and any structural variations subsequent to their manufacture;
- checking the effects of the load upon bridges during their test stages, in order to measure the deformations occurring during loading,
- continuously monitoring the microdisplacements occurring in dams, as a function of the water level fluctuations;
- continuously monitoring the stability of retainment walls for landslip masses.

As it is well known, any structure is always subject to relative movements, even if of minimum amount, of its component sections, due to a plurality of causes, such as, for instance, temperature variations due to environment air and to solar radiation, or as a consequence of a structural collapse. These deformations often become visible as cracks when a fragility collapse occurs, but they are generally invisible, in view of the fact that, in any case, they are very small with respect to the sizes of the structure as a whole.

A well experimented technique for measuring microdislocations in engineering constructions provides for connecting two points subject to relative translatory movements by means of a rigid wire to which the core of a LVDT (Linear Variable Differential Transformer) is attached. A measurement of this kind appears to be somewhat hard due to engineering hindrances, troubles on the wire or unavailability of a second support point, for instance as in the circumstance of a displacement of the construction top point as a whole with respect to the base thereof.

When it is considered that the generally occurring displacements are due to the addition of translatory and of rotatory displacements involving the whole structure or a portion thereof on one or more main planes, the measurements of angular microvariations, when carried out on regular basis, can have a substantial relevance in respect of the static control of buildings: particular relevance can be attached to controlling historical buildings. The same argument can be set forth in connection with monitoring the displacements of the soil in order to control landslip movements, as well as monitoring tunnels, bridges and all purpose constructions.

Three kinds of electronic transducer inclinometers are presently known:
- capacitor based inclinometers, that utilize the capacitance variation of a capacitor as a function of the dielectric constant due to displacement of a liquid between the capacitor plates where a dielectric material is contained or strain gauges, that measure the voltage induced by a component of the gravity force. The best resolution afforded by these devices is in the range of hundredths of a degree and the accuracy is of a few hundredths of a degree,
- servo aided inclinometers, comprising a simple pendulum and a force generating member opposite to the gravity force, adjusted by means of a closed loop adjusting system, that operates to hold the pendulum itself in a predetermined position. The suitably processed feedback output signal is proportional to the rotation angle. These transducers have a resolution in the range of some thousandths of a degree and an accuracy in the range of some hundredths of a degree,
- the bubble electrolytic sensor, comprising a vial container, provided with electrodes and filled with a conductive fluid. An air bubble within the vial changes its position as a function of the sensor rotation, thereby causing a variation of the electrical impedance between its electrodes: the rotation angle is derived from a measure of said impedance.

Taking the evaluations carried out by means of the sensors of the above mentioned kinds as a base, it can be stated that only the above bubble electrolytic sensors are adapted to detect angular microvariations of less than 10⁻⁴ sexagesimal degrees: the cost of these devices, however, is extremely high.

Since the need or convenience to carry out a survey within the above mentioned ranges are more frequent than the costs connected therewith can permit, it is an object of this invention to propose a sensor having a simple mechanical construction, capable of affording performances comparable to the performances afforded by sensors of the best presently available standard, but at a noticeably lower cost.

The sensor developed according to this invention translates the technique designed for measuring microdisplacements by connection of the points subject to relative displacements with a rigid wire and a LVDT transducer into the simple and compact, but presently less accurate, technique of the commercially available microinclinometers.

This object is fulfilled according to this invention by means of a device for measuring angular microvariations, having a double pendulum construction forming a trapezium structure comprising two vertical cylindrical legs connected to one another by a first transversal arm, having merely mechanical and structural functions, and by a second transversal cylindrical arm, also acting as a housing for an LVDT transducer, wherein the upper ends of said two vertical legs are closed by means of rubber stoppers, a wire being connected by means of screws to said rubber stoppers and a respective block being suspended therefrom within the leg, and wherein said blocks are partially immerged in a liquid material contained in two cups formed by end enlargements of said second transversal arm and are firmly interconnected by means of a rod bearing the core of said LVDT transducer, said device being equipped with a microprocessor based electronic system for detecting, processing and transmitting the measurement data.

The approach as suggested by this invention is characterized by construction ease and by lack of members relatively moving in contact with one another, by which means any uncertainty and inertia effects due to friction are eliminated, so that the position of stable equilibrium of the trapezium is determined only by the gravity force.

Since the plane of relative translation of the trapezium is vertical, a perfectly linear relationship is achieved between the displacement of the sensor core and the rotation angle. The accuracy of the sensor depends of the dimensions of the trapezium (40 cm length for an accuracy of 10⁻⁵ sexagesimal degrees) and, in conclusion, on the resolution and on the stability of the signal supplied by the used LVDT transducer.

Further details and advantages of this invention will be apparent by the following description by referring to the annexed drawings, wherein the preferred embodiment is shown by way of illustration and not by way of limitation.

In the drawings:
Figure 1 is a partially cross-section view of the device, integral housing and LVDT transducer, according to this invention,
Figure 2 is an exploded and cross-section view of the device shown in Figure 1, and
Figures 3a, 3b, 3c show in combination an electric schematic diagram of the electronic portion of the device.

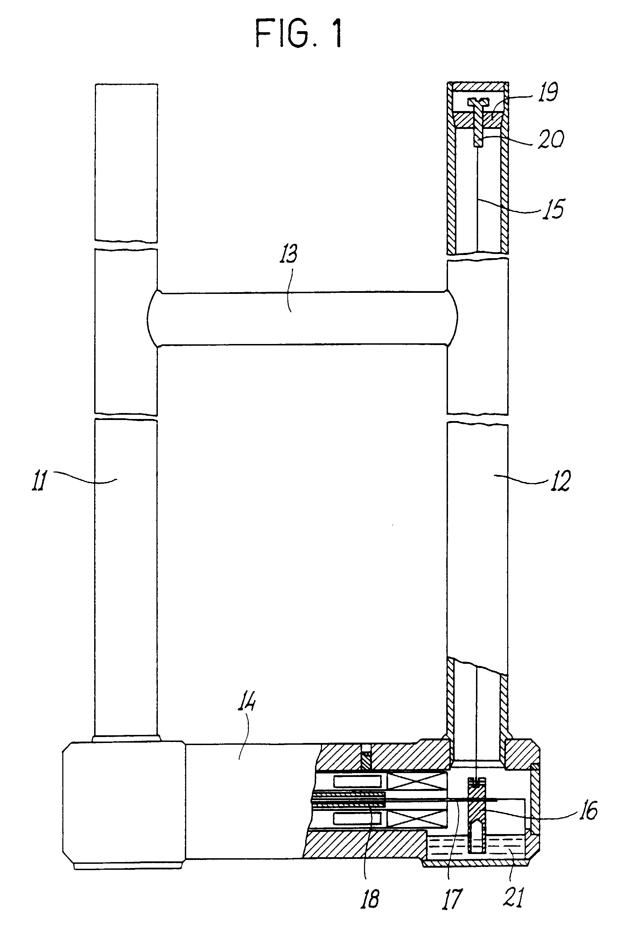

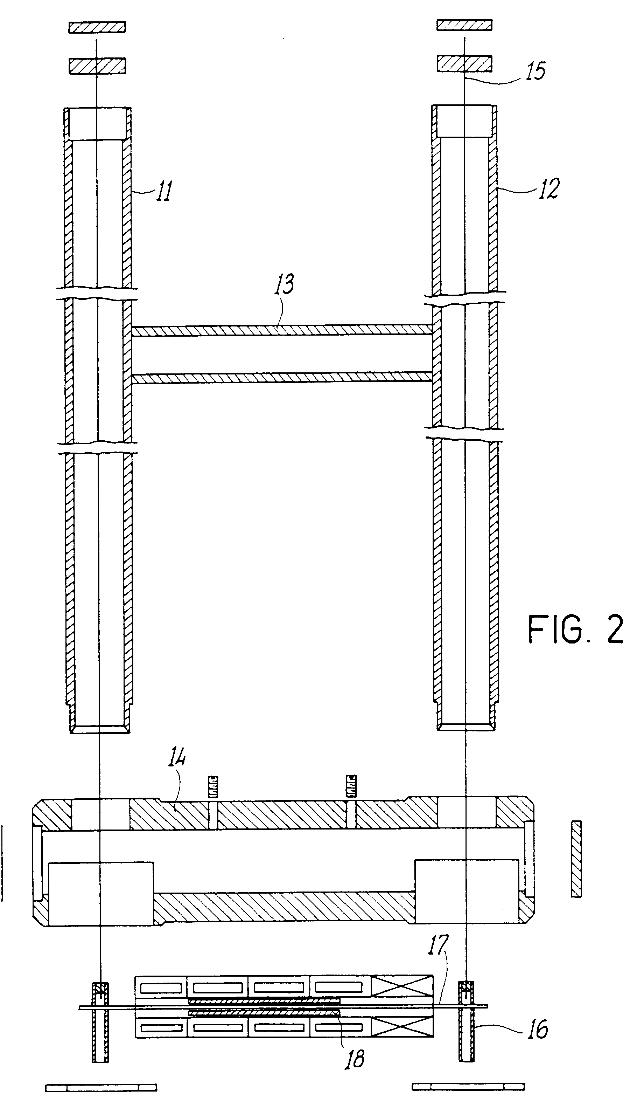

By referring now to Figures 1 and 2, it can be observed that the device according to this invention in effect comprises a composite double pendulum device consisting of two vertical cylindrical legs 11 and 12 connected to one another by means of a first transversal arm 13, having merely mechanical and structural functions, as well as by a second transversal cylindrical arm 14, also acting as a housing for a LVDT transducer.

The upper ends of said two vertical legs 11 and 12 are closed by means of rubber stoppers 19 to which a wire 15, bearing a respective block 16 suspended therefrom, is connected by means of screws 20. Blocks 16 are partially immerged in a liquid 21 contained in two respective cups formed by end enlargements of the second transversal arm 14.

Both blocks 16 are firmly interconnected by means of a rod 17 bearing the core 18 of a LVDT transducer, that is of *per se* well known construction.

A structure as above described, therefore, behaves as a conventional double pendulum and, aiming at damping the oscillatory movements of the pendulum about its equilibrium center without disturbing said equilibrium center, without affecting the sensitivity of the instrument and without jeopardizing its response velocity, it is suggested in this invention to immerge the above said two blocks 16 in a liquid 21 having a suitable viscosity. Since the damping effectiveness is proportional to the viscosity of the liquid 21, to the surface of the blocks 16 as immerged in the liquid, as well as to the weight of the trapezium, the liquid 21 and its viscosity are to be carefully selected. Favorable results are obtained by using mineral oil for gears, ethylene glycol and like.

The suspension wires 15 have to be selected so as to have a suitable rigidity value and preferably consist of natural or synthetic fibers, such as cotton, Dacron® or a polyester.

For supporting the core 18 within the LVDT transducer, a rod 17 of small diameter, for instance a maximum diameter of 1.5 mm, consisting of not ferromagnetic and not good electrical conductor material is used. Stainless austenitic steel AISI 304 or 316 has been found to be sufficiently suitable for this purpose.

For good operability purposes of the device, the core 18 suspended from the trapezium member should be centered both on the horizontal plane and on the vertical plane for both attachment points. As far as centering on the horizontal plane is concerned, it will be sufficient to create a horizontal cam formation on the attachment seat, while, in respect of the vertical plane, it will be sufficient to use the screw 20 to which wire 15 is appended.

With a device having the above described structure, the integral body of the device will carry out the following functions:
- to hold the body of the LVDT sensor in an absolutely stationary position therewithin,
- to support the movable portion of the sensor without causing friction effects,
- to support the fluid damping member,
- to anchor the device to the structure to be monitored by means of a plate.

The LVDT transducer operates as sensing component.

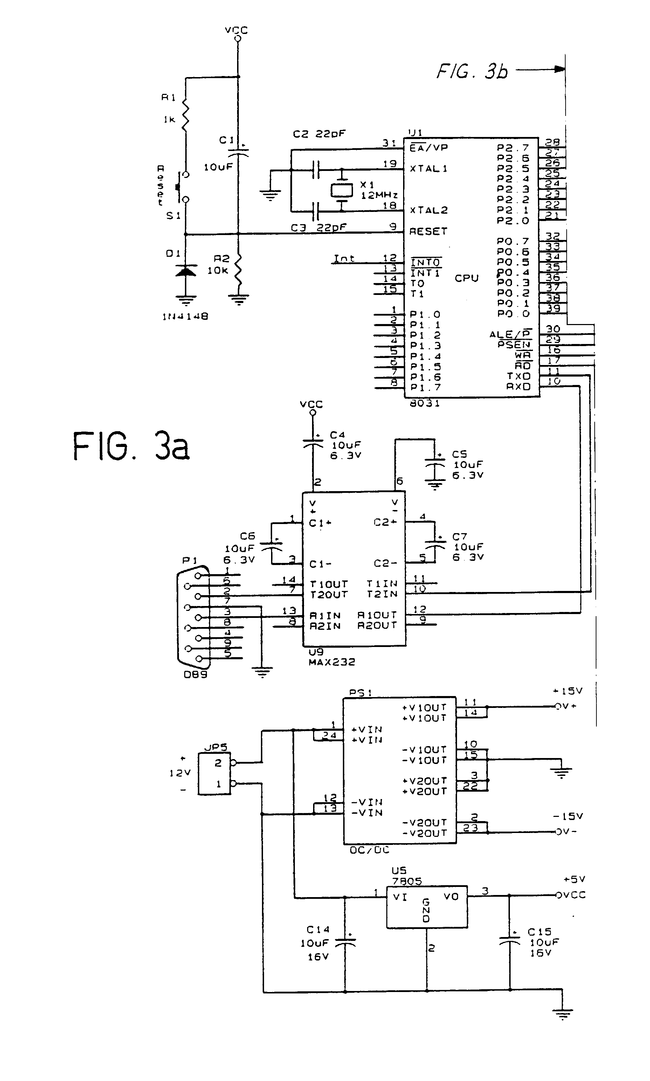

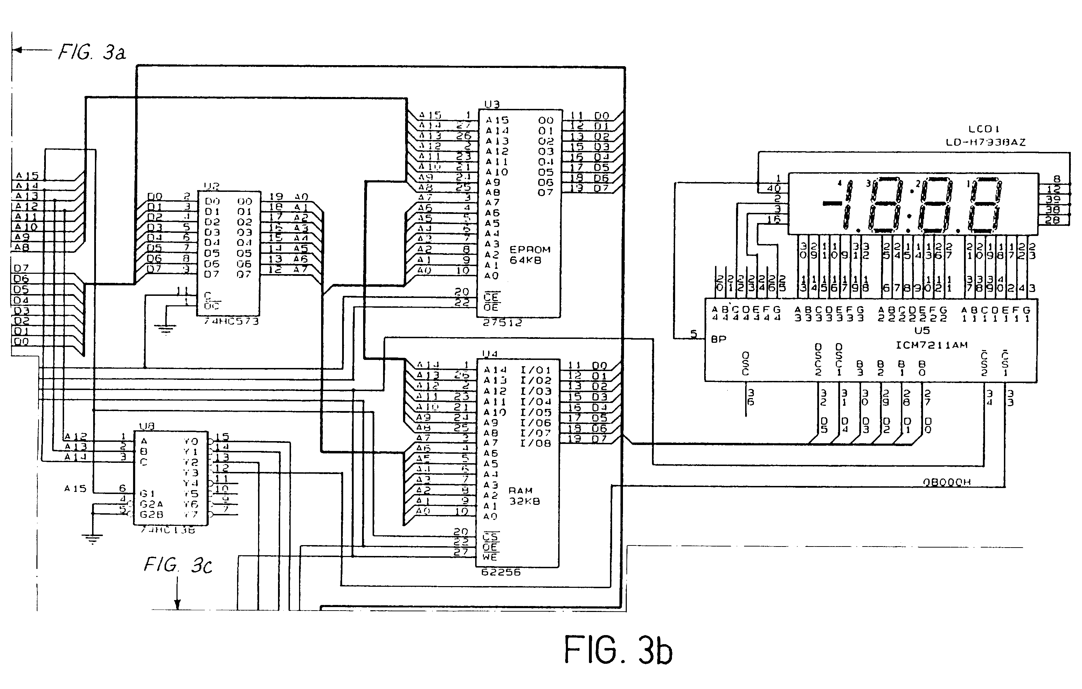

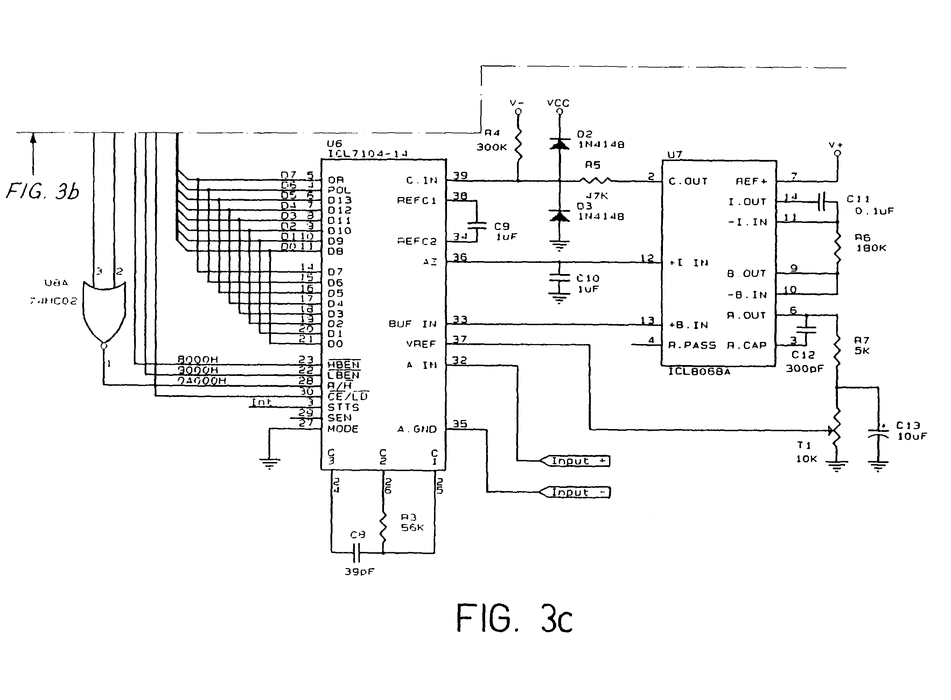

The control electronic system, based upon use of a microprocessor, is shown in Figures 3a, 3b and 3c, but it is not detailedly described, because it is not *per se* specific subject-matter of this invention. It fulfills the following functions:
- to supply power to the transducer and to amplify the signal,
- to linearize (by software) the output signal and to convert it into engineering units,
- to filter the signal and to carry out any statistical process adapted to minimize the measure errors,
- to measure the temperature and possibly the humidity values as present in the environment and to calculate the cross correlation with the displacement measures,
- to display the measurement results and to connect the device to other systems by serial links or radio links.

The preferred embodiment has been hereinbefore described, but it should expressly be understood that those skilled in the art can make a number of changes and modifications in the details and construction particulars, as well as in the materials as suggested, without so departing from the scope of this invention, as defined by the appended claims.

## Claims

1. A device for measuring angular microvariations, having a double pendulum construction forming a trapezium structure comprising two vertical cylindrical legs (11, 12) connected to one another by means of a first transversal arm (13), having merely mechanical and structural functions, and by means of a second transversal cylindrical arm (14), also acting as a housing for an LVDT transducer, wherein the upper ends of said two vertical legs (11, 12) are closed by means of rubber stoppers (19) and a wire (15) is connected to said rubber stoppers (19) by means of screws (20) and a respective block (16) is suspended therefrom within the leg, said blocks (16) being partially immerged in a liquid material (21) contained in two cups formed by end enlargements of said second transversal arm (14) and being firmly interconnected by means of a rod (17) bearing the core (18) of said LVDT transducer, the device being equipped with a microprocessor based electronic system to detect, process and transmit the measurement data.

2. A device for measuring angular microvariations according to claim 1, characterized in that the liquid material (21) wherein said blocks (16) are immerged is a high viscosity liquid capable of damping the oscillations of the double pendulum structure.

3. A device for measuring angular microvariations according to claim 2, characterized in that said liquid material (21) is selected among mineral oils, ethylene glycol and like.

4. A device for measuring angular microvariations according to claim 1, characterized in that the suspension wires (15) for said blocks (16) are made of natural or synthetic fibers having a sufficient rigidity value, in particular cotton and polyesters.

5. A device for measuring angular microvariations according to claim 1, characterized in that said rod (17) bearing the core (18) of the LVDT transducer is of a non magnetic and not good electrically conductive material.

6. A device for measuring angular microvariations according to any one of the preceding claims, characterized in that the core (18) of the LVDT transducer appended to the trapezium structure is held centered both on a horizontal plane, by means of a horizontal cam formation at the attachment seat, and on a vertical plane, by means of said wire attaching screws (20), for both support points.

## Patentansprüche

1. Vorrichtung zur Messung der Vinkelmikroabänderungen, mit einer trapezförmigen Doppelpendelbauart, die zwei senkrechte Zylinderspindel (11,12) die Miteinander durch einen ersten, grundsätzlich nur mechanische und bauliche Funktionen habenden zylindrischen Querarm (13) und durch einen zweiten, gleichzeitig als Gehäuse für einen LVDT-Transduktor dienen den zilindrischen Querarm (14) verbunden sind, wobei die oberen Enden der beiden senkrechten Spindeln (11,12) mittels Gummistöpsel (19) geschlossen sind und je ein Draht (15) an die vorgenannten Gummistöpsel (19) durch Schrauben (20) verbunden und je eine Masse (16) innerhalb der Spindel daran angehängt ist, wobei diese Massen (16) teilweise in einem flüssigen, in einer durch eine Verbreitung der Ende der vorgenannten zweiten Querarme (14) gebildeten Schale enthaltenen Stoff (21) eingetaucht und miteinander durch einen den Kern (18) des vorgenannten LVDT-Transduktor tragenden Stab (17) starr verbunden sind und wobei die Vorrichtung mit einem elektronischen, auf einem Mikroprozessor basierten System zur Ermittelung, Verarbeitung und Weiterleitung der Messdaten versehen ist.

2. Vorrichtung zur Messung der Vinkelmikroabänderungen nach Anspruch 1, dadurch gekennzeichnet, dass der flüssige Stoff (22), in welchem die vorgenanten Massen (16) eingetaucht sind, eine sehr dichte Flüssigkeit ist, die die Schwingungen der Doppelpendelstruktur zu dämpfen vermag.

3. Vorrichtung zur Messung der Vinkelmikroabänderungen nach Anspruch 2, dadurch gekennzeichnet, dass der vorgenannte flüssige Stoff unter Mineralölen, Ethylenglycol und dergleichen ausgewählt ist.

4. Vorrichtung zur Messung der Vinkelmikroabänderungen nach Anspruch 1, dadurch gekennzeichnet, dass die Aufhängedrähte (15) für die vorgenannte Massen (16) aus natürlichen oder künstlichen Faden mit ausreichenden Widerstandswerten, insbesondere Baumwolle und Polyesther bestehen.

5. Vorrichtung zur Messung der Vinkelmikroabänderungen nach Anspruch 1, dadurch gekennzeichnet, dass der vorgenannte den Kern (18) tragende Stab (17) des LVDT-Wandlers aus einem nicht magnetischen und elektrisch nicht gut leitenden Stoff hergestellt ist.

6. Vorrichtung zur Messung der Vinkelmikroabänderungen nach je einem der vorhergehenden Ansprüche, dadurch gekennzeihnet, dass der Kern (18) des an der trapezförmigen Struktur angehängten der LVDT-Wandlers auf einer waagerechten Ebene durch eine waagerechte Nockenanordnung am Sicherungssitz und auf einer senkrechten Ebene durch die vorgenannten Drahtbefestigungsschrauben (20) für beide Tragestellen zentriert gehalten ist.

## Revendications

1. Dispositif pour mesurer des microvariations angulaires, ayant une construction a double pendules formant une structure trapézoïdale et comprenant deux tiges cylindriques verticales (11,12) unies l'une à l'autre au moyen d'un premier bras transversal (13), ayant principalement des functions mécaniques et structureles et au moyen d'un deuxième bras cylindrique transversal (14), ageant aussi comme une enveloppe pour un transducteur LVDT, dans lequel les extremités supérieures desdites deux tiges verticales (11,12) sont formées au moyen des bouchons de caoutchouc (19) et un fil (15) est joint audits bouchons de caoutchouc (19) au moyen des vis (20) et un bloc respectif est suspendu par le fil dans la tige, lesdits blocs étant partiellement plongés dans un matèriel liquide (21) contenu dans deux coupes formées par élargissements des extremitès dudit deuxième arm transversal (14) et étant rigidement jointes au moyen d'une barre (17) portante le noyaeau dudit transducteur LVDT, le dispositif étant pourvu d'un système èlectronique pour détecter, èlaborer et trasmettre les données de mesurage.

2. Dispositif pour mesurer des microvariations angulaires selon la revendication 1, caractérisé en ce que le matériel liquid (21), dans lequel sont plongés lesdits bloes (16), est un liquid très visqueux, susceptible d'amortir les oscillations de la structure à double pendules..

3. Dispositif pour mesurer des microvariations angulaires selon la revendication 2, caractérisé en ce que ledit matérial liquide est choisi entre des huiles minérales, éthylène glycol et autres produits similaires.

4. Dispositif pour mesurer des microvariations angulaires selon la revendication 1, caractérisé en ce que lesdits fils de suspension (15) pour lesdits blocs (16) sont faits des fibres natureles ou synthetiques ayants un valeur de resistance suffisant, en particulaire coton et polyesters.

5. Dispositif pour mesurer des microvariations angulaires selon la revendication 1, caractérisé en ce que ladite barre (17) portant le noyeau (18) du transducteur LVDT est d'un matériel non magnetique et non bon conducteur de l'électricité.

6. Dispositif pour mesurer des microvariations angulaires selon l'une quelconque des revendications précédentes, caractérisé en ce que le noyeau (18) du transducteur LVDT, suspendu à la structure trapézoïdale, est tenu centré soit sur un plan horizontal au moyen d'une formation à came en le siège d'ablocage, soit sur un plan vertical ou moyen desdits vis (20) d'ablocage du fil, pour les deux points de support.
